# EUROPÄISCHE PATENTSCHRIFT

(11) **EP 1 593 951 B1**
(45) Veröffentlichungstag und Bekanntmachung des Hinweises auf die Patenterteilung: **29.10.2014**
(21) Anmeldenummer: 05007592.8
(22) Anmeldetag: 07.04.2005
(51) Int. Cl.: G01M 11/04

(54) **Hochstabile und sehr leichte optische Bank und extraterrestrische Verwendung einer solchen optischen Bank**
Very stable and very light optical bench and its use in outer space
Banc optique très stable et très léger et son utilisation dans l'espace

(30) Priorität: 04.05.2004 CH 7902004
(43) Veröffentlichungstag der Anmeldung: 09.11.2005
(73) Patentinhaber: Oerlikon Space AG, 8052 Zürich (CH)
(72) Erfinder: Herren, Andreas, 8259 Wagenhausen (CH); Niedermann, Benno, 8052 Zürich (CH); Mérillat, Stéve, 8037 Zürich (CH)
(74) Vertreter: OK pat AG

(56) Entgegenhaltungen:
- EP-A- 0 887 680
- EP-A- 0 926 525
- US-A- 5 443 884
- US-A1- 2003 082 315
- DIDIER MORANÇAIS ET AL: 'ALADIN: THE FIRST EUROPEAN LIDAR IN SPACE' PRO CEEDINGS OF THE 5TH INTERNATIONAL CONFERENCE ON SPACE OPTICS (ICSO 2004), 30 MARCH- 2 APRIL 2004, TOULOUSE, FRANCE, [Online] 02 April 2004, Seiten 13 - 17, XP055029900 Gefunden im Internet: <URL:http://articles.adsabs.harvard.edu/cgi -bin/nph-iarticle_query?2004ESASP.554...13M &defaultprint=YES&filetype=.pdf> [gefunden am 2012-06-14]

## Beschreibung

Die vorliegende Erfindung betrifft eine stabile, leichte optische Bank und deren Verwendung im Weltall.

Optische Aufbauten benötigen sehr genaue Montageplattformen für die Platzierung einzelner optischer Elemente, wie zum Beispiel Filter, Prismen, Spiegel, Linsen, usw. Typischerweise dient eine optische Bank als Montageplattform für derartige Elemente. Didier Morançais Et Al: 'Aladin: The first European Lidar in space' Proceedings of The 5th International Conference On Space Optics (ICSO 2004), 30 March- 2 April 2004, Toulouse, France, Seiten 13 - 17 offenbart so eine Vorrichtung mit einer flachen optischen Bank und mindestens einem optischen Element, das auf der flachen optischen Bank angebracht ist, wobei die flache optische Bank Aufhängungen umfasst, die zur Krafteinleitung in die Bank mit einem oder mehreren Teilen der Bank verbunden sind, und wobei das optische Element durch "Kaltverschweissen" oder Verkleben auf der flachen optischen Bank angebracht ist. Solch eine optische Bank kann z.B. Teil des optischen Systems des europäischen Patent EP-A-0 887 680 sein.

Für viele Anwendungen spielen weder der Platz noch das Gewicht eine entscheidende Rolle und es können entsprechende Materialen und Aufbauten gewählt werden. Bei moderneren Anwendungen kommen häufig massive Platten aus Glas oder Glaskeramik zum Einsatz.

Immer häufiger jedoch werden optische Aufbauten bewegt oder in sich bewegenden Systemen eingesetzt. In diesem Fall kann die Grösse und das Gewicht der optischen Bank eine wichtige Rolle spielen. Besonders bei Aufbauten, die beschleunigt und gebremst werden müssen, ist das Gewicht ein entscheidender Faktor.

Solche Anwendungen beruhen heutzutage häufig auch auf Platten aus Glas oder Glaskeramik, wobei zum Reduzieren des Gewichts Ausnehmungen in den Platten zum Beispiel durch Fräsen gebildet werden. Es ist ein Vorteil dieses Ansatzes, dass das gesammelte Wissen im Umgang mit solchen auf Glas- oder Glaskeramikplatten basierenden Vorrichtungen weiterhin eingesetzt werden kann. Es ist ein Nachteil dieses Ansatzes, dass die Massenreduktion durch die Ausnehmungen für zahlreiche Anwendungen nicht ausreichend ist. Ausserdem ist das Herstellen der Ausnehmungen aufwendig und kann zu Ausschuss in der Fertigung führen. Ein weiterer Nachteil wird im Verlust der Festigkeit gesehen. Besonders bei Anordnungen, die dynamisch belastet werden, oder beim Einsatz in einem Umfeld mit stark schwankenden Temperaturen, wie zum Beispiel im Weltall, verursachen die Ausnehmungen Inhomogenitäten, die zum Beispiel Verspannungen hervorrufen können. Besonders nachteilig ist das Aushöhlen von Zerodur-Platten durch Fräsen, da bei diesem Bearbeitungsschritt die Teile in Folge interner Spannungen gerne zerreissen.

Als Beispiel für besonders kritische Anwendungen ist der Einsatz optischer Aufbauten im Weltall genannt. Diese Aufbauten müssen in das Weltall transportiert und dort dauerhaft und zuverlässig eingesetzt werden können. Besonders beim Start der Trägerrakete, die einen optischen Aufbau in das All bringen soll, werden die Kosten nach Gewicht ermittelt, da pro Kilogramm zu transportierender Masse ein enormer Energieaufwand geleistet werden muss.

Neben dem Gewicht sind bei sich bewegenden optischen Systemen oder bei optischen Systemen, die bewegt werden, auch andere Faktoren wichtig. Kriterien, deren Einhaltung von grundlegender Bedeutung ist, sind die (Verwindungs-)Steifigkeit, Rauhigkeit, Ebenheit, Temperaturbeständigkeit, Schockbeständigkeit, usw.

Es ist eine Aufgabe der Erfindung eine Vorrichtung bereitzustellen, welche die Nachteile bekannter Vorrichtungen behebt oder reduziert.

Aufgabe der Erfindung ist es daher eine optische Bank bereit zu stellen, die leichter ist als konventionelle Aufbauten und die gleichzeitig die wesentlichen Kriterien erfüllt, die je nach Anwendung und Einsatzgebiet an das optische System gestellt werden.

Ausserdem ist es eine Aufgabe der Erfindung eine optische Bank bereit zu stellen, die extraterrestrisch einsetzbar ist.

Die Lösung dieser Aufgabe erfolgt erfindungsgemäss für die Vorrichtung durch die Merkmale des Anspruchs 1, und für die Verwendung durch die Merkmale des Anspruchs 10.

Vorteilhafte Weiterbildungen der Vorrichtung werden durch die abhängigen Ansprüche 2 bis 9 definiert. Eine vorteilhafte Verwendung wird durch den abhängigen Anspruch 11 definiert.

Weitere Eigenschaften und Vorteile der Erfindung werden im folgenden anhand der Beschreibung und mit Bezug auf die Zeichnung ausführlich beschrieben. Es zeigen:
- **Fig. 1**: eine erste optische Bank gemäss der vorliegenden Erfindung in einer schematischen Darstellung;
- **Fig. 2**: eine erste optische Bank gemäss der vorliegenden Erfindung in einer schematischen Explosionsdarstellung;
- **Fig. 3**: weitere Details der ersten optische Bank gemäss der vorliegenden Erfindung in einer schematischen Darstellung;
- **Fig. 4**: eine zweite optische Bank gemäss der vorliegenden Erfindung in einer schematischen Teildarstellung.

### Detaillierte Beschreibung der Erfindung:

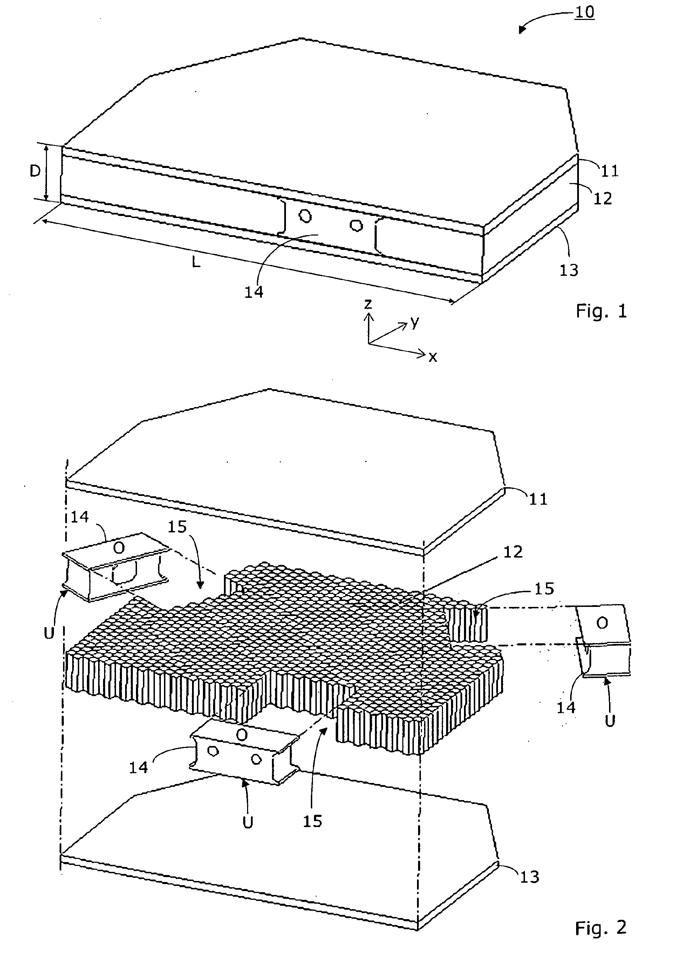

Das Prinzip der vorliegenden Erfindung ist im Zusammenhang mit einem ersten Ausführungsbeispiel beschrieben. Dieses erste Ausführungsbeispiel ist in Fig. 1 in Form einer schematischen Ansicht und in Fig. 2 in Form einer schematischen Explosionszeichnung dargestellt.

Es ist eine Ansicht einer optischen Bank 10 gezeigt, die gemäss Erfindung eine Schichtstruktur umfasst. Die Schichtstruktur weist eine Wabenplatte 12 mit einer flächigen Ober- und Unterseite auf. Diese Wabenplatte umfasst vorzugsweise Leichtmetall (Aluminium), Papier (vorzugsweise Nomex® Aramid Papier) oder kohlenfaserverstärktem Kunststoff (CFK). Ähnliche Wabenstrukturen sind aus den Patenten US 2003/0082315 und US-A-5 443 884 bekannt. Vorzugsweise handelt es sich um eine extrudierte Wabenplatte 12. Eine erste Deckschicht 11 ist mit der Oberseite der Wabenplatte 12 verklebt. Sie umfasst eine erste glasartige Platte, die auf derjenigen Seite oberflächenbehandelt ist, die von der Wabenplatte 12 abgewandt ist. Im gezeigten Beispiel ist die sichtbare Oberfläche oberflächenbehandelt. Eine zweite Deckschicht 13 ist mit der Unterseite der Wabenplatte 12 verklebt. Sie umfasst eine zweite glasartige Platte, die je nach Ausführungsform eventuell auch oberflächenbehandelt sein kann. Zusätzlich umfasst die optische Bank 10 Aufhängungen 14, die zur Krafteinleitung in die Schichtstruktur mit einem oder mehreren Elementen der Schichtstruktur verklebt sind. In Fig. 2 ist zu erkennen, dass die Aufhängungen 14 wie Inserts in Aussparungen 15 eingesetzt werden.

In einer bevorzugten Ausführungsform werden die Aufhängungen im Wesentlichen nur mit der Unterseite der oberen Deckschicht 11 und der Oberseite der unteren Deckschicht 13 verklebt. In diesem Fall sind hauptsächlich die Oberseiten O und die Unterseiten U der Aufhängungen 14 mit den Deckschichten 11, 13 verbunden. Die entsprechenden Klebeverbindungen werden hauptsächlich in einer Richtung parallel zu ihrer flächigen Ausdehnung in der x-y Ebene belastet (Scherbelastung). Die Lasteinleitung erfolgt somit über grosse Schubflächen, deren Flächenausdehnung durch die Grösse der oberen und unteren Fläche der Aufhängungen 14 definiert wird.

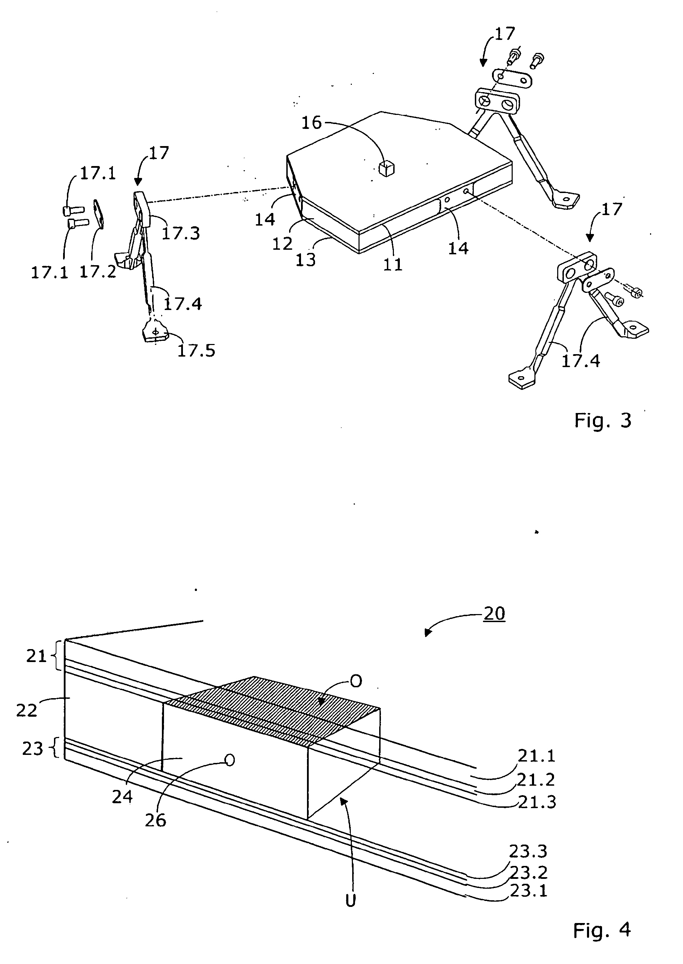

Vorzugsweise weisen die Aufhängungen 14 Löcher auf, die Stifte, Schrauben 17.1 oder Achsen aufnehmen können, wie in Fig. 3 gezeigt. Bevorzugter Weise werden diese Verbindung verklebt. In diesem Falle dienen die Löcher zur provisorischen Verschraubung, respektive dem Einspritzen von Klebstoff. Je nach Anwendung reicht aber das reine Verschrauben.

In Fig. 2 ist die Wabenstruktur der Wabenplatte 12 zu erkennen. Die Wabenplatte 12 umfasst gemäss Erfindung eine grosse Zahl an einzelnen wabenförmigen Zellen, die beispielsweise aus dünnen, entsprechend extrudierten Aluminiumfolien erzeugt werden. Die Wabenplatte 12 hat flächige Ober- und Unterseiten, die sich senkrecht zu den Wandungen erstrecken und in der x-y Ebene liegen.

Im gezeigten Beispiel hat die optischen Bank 10 eine 6-eckige Form (von oben oder unten betrachtet) mit sechs geraden Kanten. Es kann aber nahezu jede andere gewünschte Form realisiert werden. Die geforderte optische Stabilität definiert das Verhältnis zwischen Dicke D und grösster Länge L. Erfindungsgemäss liegt das Verhältnis zwischen 1/20 und 1/5. Wird das Verhältnis zwischen Dicke D und grösster Länge L unter Berücksichtigung dieser Werte gewählt, so kann für die meisten optischen Anwendungen eine ausreichende Stabilität bei geringem Gewicht gewährleistet werden.

In der gezeigten Ausführungsform umfassen die obere und die untere Deckschicht 11, 13 nur je eine glasartige Platte und je eine Klebeschicht, die in den Figuren 1 und 2 nicht zu erkennen ist. Die glasartigen Platten sind also direkt auf die Wabenplatte 12 geklebt.

Eine bevorzugte, erfindungsgemässe Aufhängung der optischen Bank 10 ist in Fig. 3 gezeigt. Es sind drei sogenannte Bipods 17 vorgesehen, die zusammen eine 3-Punkt Aufhängung ergeben. Die Bipods, wie der Name sagt, haben zwei Schenkel 17.4, die in Fussplatten 17.5 enden. In den Fussplatten 17.5 können Löcher zum Befestigen der Bipods 17 an einem Rahmen oder einer Montageplattform vorgesehen sein. Die Bipods 17 können auch auf einer anderen optischen Bank ruhen. Im Bereich wo sich die beiden Schenkel 17.4 treffen ist eine Befestigungsplatte 17.3 vorgesehen, die im gezeigten Beispiel zwei Durchgangslöcher aufweist. Es können eine Unterlegscheibe 17.2 aufgelegt und Schrauben 17.1 durch die Löcher der Befestigungsplatte 17.3 hindurch in die Löcher der Aufhängungen 14 geschraubt werden. Mit einer solchen Aufhängung der optischen Bank 10 ergibt sich, insbesondere wenn zusätzlich noch verklebt, eine leichte und sehr stabile Dreipunktlagerung. In der Fig. 3 ist ein optisches Element 16 gezeigt, das auf der oberflächenbehandelten glasartigen Platte 11 befestigt ist. Es handelt sich bei dem gezeigten optischen Element 16 um einen Referenzkubus. Die beschriebene 3-Punkt Aufhängung eignet sich besonders für den Einsatz in Satelliten.

Unter anderem können die folgenden optischen Elemente auf oberflächenbehandelten glasartigen Platte 11 befestigt sein: Prismen, Linsen, Spiegel, Spacer, Viertelwellen- oder Halbwellenplatten, Filter, Laser, Etalons, optische Detektoren, usw. Mit solchen optischen Elementen können Resonatoren, Lichtquellen, Interferrometer, Sender, Empfänger, Kameras und andere optische Systeme realisiert werden.

Eine weitere Ausführungsform einer optischen Bank 20 ist in Fig. 4 in Form einer schematischen Teilansicht gezeigt. In der gezeigten Ausführungsform umfassen die obere Decksicht 21 und die untere Deckschicht 23 der optischen Bank 20 je eine glasartige Platte 21.1 und 23.1, je eine Klebeschicht 21.3 und 23.3, und je eine faserverstärkte Schicht 21.2 und 23.2. Die glasartigen Platten 21.1 und 23.1 sind in diesem Fall nicht direkt auf die Wabenplatte 22 geklebt, sondern durch die faserverstärkten Schichten (z.B. aus CFK) 21.2 und 23.2 und die Klebeschichten 21.3 und 23.3 von der Wabenplatte 22 beabstandet. Dies hat den Vorteil dass, sofern nötig, die Steifigkeit pro Gewichtseinheit nochmals signifikant erhöht werden kann. Es ist eine Aufhängung 24 gezeigt, deren Oberseite O (schraffiert dargestellt) mit der Unterseite der Klebeschicht 21.3 verklebt ist und deren Unterseite U (nicht dargestellt) mit der Oberseite der Klebeschicht 23.3 verklebt ist. Auf der grau dargestellten Vorderseite weist die Aufhängung 24 ein Loch 26 auf, das einen Stift, eine Schraube oder eine Achse aufnehmen kann. Damit kann zum Beispiel eine ähnliche Aufhängung wie in Fig. 3 gezeigt eingesetzt werden.

Gemäss Erfindung ist mindestens ein optisches Element durch optisches Kontaktieren oder Verkleben auf der oberflächenbehandelten Seite der ersten glasartigen Platte angebracht. In den Figuren 1 und 2 ist kein optisches Element gezeigt, da in diesen Figuren nur der Aufbau der optischen Bank 10 in einer ersten Ausführungsform gezeigt ist. In Fig. 3 ist ein optisches Element beispielhaft gezeigt.

Beim optischen Kontaktieren wird das optische Element angesprengt. Es entsteht aufgrund von Adhäsionskräften eine Haftung zwischen dem optischen Element und der oberflächenbehandelten, glasartigen Platte. Vorzugsweise werden vor dem Ansprengen die Oberfläche der glasartigen Platte und eine Seite des zu befestigenden optischen Elements so glatt poliert, dass beides aufgrund der atomaren Anziehung aneinander haftet. Wichtig ist, dass die Verbindung so gut ist, dass das Element sich nicht löst. In einer besonderen, optionalen Ausführungsform ist die Verbindung mindestens in einen gewissen Wellenlängenbereich transparent, um Verluste zu vermeiden. Vorzugsweise wird das Ansprengen in einem Reinraum durchgeführt. Besonders bevorzugt ist ein Reinraum der Klasse 100 oder besser.

Die optischen Element werden gemäss Erfindung entweder angesprengt (optical contacting), wie im letzten Absatz beschrieben, oder sie werden mittels Silikatkleber (Hydro-Catalytic Bonding) befestigt. Beiden Verfahren ist gemeinsam, dass die Verbindung praktisch direkt erfolgt. Beim Ansprengen ist die Dicke Null, bei der Silikatklebung ein paar bis gut 100 Nanometer. Selbstverständlich können die Teile auch "normal" verklebt werden, mit Klebedicken von einigen Mikrometern.

Vorzugsweise hat jede der glasartigen Statten eine Dicke zwischen 0.5 und etwa 5 Millimetern. Besonders bevorzugt ist eine Plattendicke um 2.5 bis 3.5 Millimeter.

Die Waben der Wabenstruktur haben vorzugsweise eine Zellengrösse von 2 bis 8 Millimeter und eine hexagonal angeordnete Zellkonstruktion.

Es ist ein Vorteil der Erfindung, dass die Masse im Vergleich zu konventionellen Anordnungen um bis zu 60% und mehr reduziert werden kann, ohne die wichtigsten Kriterien der optischen Bank zu vernachlässigen.

Vorzugsweise handelt es sich bei den glasartigen Platten um Zerodur (Schott Glass Technologies; Duryea, PA), ULE (Corning Inc.; Corning, NY), oder Quarzglas (fused silica). Zerodur ist ein Keramikglas mit extrem niedrigem Ausdehnungskoeffizient und ULE ist ein Titanium Silikat mit extrem niedrigem Ausdehnungskoeffizient. Besonders bevorzugt ist ein symmetrischer Aufbau der auf der Ober- und Unterseite je eine glasartige Platte aus identischem Material umfasst. Dadurch können thermische Verspannungen reduziert werden. Jede Abweichung von einem symmetrischen Schichtaufbau kann wie bei einem Bimetall zu Verspannungen führen. Dies schliesst hingegen nicht aus, dass die beiden Deckplatten unterschiedliche Dicken aufweisen.

Eine optische Bank gemäss Erfindung erlaubt eine sehr viel bessere Krafteinleitung. Dadurch ist das Einsatzgebiet sehr viel breiter. Dynamische Belastungen können durch die besondere Art der Krafteinleitung besser aufgenommen werden, ohne Schaden an der optischen Bank oder seinen Elementen zu verursachen. Temperaturschwankungen können besser aufgenommen werden, ohne Probleme zu verursachen.

Bei der Herstellung muss keine zeit- und kostenaufwendige Bearbeitung von Glasplatten oder Glaskeramikplatten vordenommen werden. Es können mehr oder weniger kommerziell verfügbare Platten verwendet werden. Dadurch werden die Gesamtkosten reduziert und der Ausschuss klein gehalten.

Es ist ein Vorteil der Erfindung, dass einfache glasartige Platten verwendet werden können, die an sich tragfähiger sind, da sie keinerlei Ausnehmungen aufweisen.

Vorzugsweise werden die Deckschichten in einem Vakuum mit der Wabenstruktur verbunden. Besonders für den Einsatz im Weltall geeignet sind Wabenplatten, deren Wandungen Löcher aufweisen, um so eine Druckausgleich zu ermöglichen. Bevorzugt sind Wabenplatten mit perforierten Wandungen.

Es ist ein Vorteil der Erfindung, dass die Decksicht an die jeweilige Anwendung anpassbar ist. Es können gemäss Erfindung Genauigkeiten im Nanometerbereich erzielt werden. Vorzugsweise beträgt die Rauheit einer oberflächenbehandelten glasartigen Platte weniger als 10 Nanometer und vorzugsweise weniger als 5 Nanometer. Die Ebenheit über die gesamte Flächenausdehnung ist zwischen 10 bis 200 Nanometer und vorzugsweise zwischen 10 bis 50 Nanometer.

Die Wabenstruktur 12 hat den Vorteil, dass sie in der x-y Ebene relativ weich ist. Dadurch, dass sie sowohl auf der Oberseite als auch auf der Unterseite mit der jeweiligen Deckschicht 11 bzw. 13 verklebt ist, ergeben sich in der x-y Ebene keine nennenswerten thermischen Bewegungen. In z-Richtung jedoch kann die Schichtstruktur frei arbeiten. Bei Temperaturerhöhung dehnt sich die Wabenstruktur zu gleichen Teilen nach oben und nach unten aus. Da die beiden Deckschichten unabhängig voneinander sind, kann die gesamte Schichtstruktur in z-Richtung arbeiten.

Die Wabenstruktur ist aus Leichtmetall-Wandungen aufgebaut und hat eine hohe Wärmeleitfähigkeit. Temperaturgradienten werden durch die gute Wärmeleitfähigkeit schnell ausgeglichen, ohne dass es zu lokalen Verspannungen kommen könnte, die einen Verspannung der Deckschichten hervorrufen könnte. Besonders bevorzugt sind Aluminium Wabenstrukturen, da Aluminium hochleitfähig ist.

Bei der Montage einer erfindungsgemässen optischen Bank 10 werden zuerst die Schichten der Schichtstruktur miteinander verklebt. Dabei wird vorzugsweise ein Epoxy-Klebefilm eingesetzt, der bei erhöhten Temperaturen aushärtet. Der Klebefilm wird auf die Wabestruktur aufgebracht und es werden die Deckschichten aufgelegt. Dann wird durch Erwärmung, zum Beispiel in einem Ofen, das Aushärten des Klebefilm initiiert. Erst nach dem Aushärten werden die Aufhängungen 14 auf den Ober- und Unterseiten (O, U) mit einem geeigneten Kleber versehen und in die Ausnehmungen 15 eingesetzt. Durch diese Art der schrittweisen Montage können Verspannungen ausgeschlossen werden.

In weiteren Schritten werden dann die optischen Elemente entweder angesprengt oder aufgeklebt. Vorher wird vorzugsweise die Oberfläche der glasartigen Platte behandelt, zum Beispiel um Fettreste zu entfernen. Die optischen Elemente werden, wie bereits erwähnt, vorzugsweise in einem Reinraum angesprengt oder aufgeklebt.

Vorzugsweise ist die optische Bank und ihre Aufhängung so ausgebildet sein, dass sie für einen Transport in den Weltraum geeignet ist, der üblicherweise mit einer Rakete erfolgt und mit hohen statischen Belastungen und Vibrationen verbunden ist. Schliesslich müssen die optische Elemente so auf der optischen Bank befestigt sein, dass die im Weltraum vorkommenden hohen Temperaturdifferenzen und die durch diese Temperaturdifferenzen verursachten steilen Temperaturgradienten keine negativen Einflüsse auf das Gesamtsystem ausüben.

Vorzugsweise wird die optische Bank mit den optischen Elementen als Bestandteil eines optischen Teleskops eingesetzt, das für die Kommunikation zwischen Satelliten (Intersatelliten-Kommunikation), oder für die Kommunikation zwischen einer terrestrischen Einrichtung und einem Satelliten ausgelegt ist. Die optische Bank kann aber zum Beispiel auch Bestandteil eines Spektrometers sein.

## Patentansprüche

1. Vorrichtung mit einer flachen optischen Bank (10; 20) und mindestens einem optischen Element (16), das auf der flachen optischen Bank (10; 20) angebracht ist, wobei die flache optische Bank (10; 20) eine Schichtstruktur umfasst, mit
- einer extrudierten Wabenplatte aus Leichtmetall, Papier oder kohlenfaserverstärktem Kunststoff (12; 22) mit einer flachen Ober- und Unterseite,
- einer ersten Deckschicht (11; 21), die mit der Oberseite der Wabenplatte (12; 22) verklebt ist und eine erste glasartige Platte (21.1) umfasst, die auf derjenigen Seite oberflächenbehandelt ist, die von der Wabenplatte (12; 22) abgewandt ist,
- einer zweiten Deckschicht (13; 23), die mit der Unterseite der Leichtmetall-Wabenplatte (12; 22) verklebt ist und eine zweite glasartige Platte (23.1) umfasst,
wobei die flache optische Bank (10; 20) Aufhängungen (14) umfasst, die zur Krafteinleitung in die Schichtstruktur mit einer Unterseite der ersten Deckschicht (11; 21) und/oder einer Oberseite der zweiten Deckschicht (13, 23) verklebt sind, und wobei das optische Element (16) durch optisches Kontaktieren oder Verkleben auf der oberflächenbehandelten Seite der ersten glasartigen Platte (21.1) angebracht ist.

2. Vorrichtung nach Anspruch 1, **dadurch gekennzeichnet, dass** die erste glasartige Platte (21.1) und/oder die zweite glasartige Platte (23.1) aus Glas oder einer Glaskeramik, vorzugsweise Zerodur, UVM, oder einem Quarzglas besteht.

3. Vorrichtung nach Anspruch 1 oder 2, **dadurch gekennzeichnet, dass** die Wabenplatte (12; 22) Aluminium, Papier oder CFK umfasst, wobei Wandungen der Wabenplatte (12; 22) Löcher, vorzugsweise in Form einer Perforierung, aufweist

4. Vorrichtung nach Anspruch 1, 2 oder 3, **dadurch gekennzeichnet, dass** die erste Deckschicht (11; 21) zusätzlich zu der ersten glasartigen Platte (21.1) eine Zwischenschicht (21.2) umfasst, die zwischen der Wabenplatte (12; 22) und der ersten glasartigen Platte (21.1) angeordnet ist und vorzugsweise ein faserverstärktes Material umfasst.

5. Vorrichtung nach Anspruch 1, **dadurch gekennzeichnet, dass** im Rahmen der Oberflächenbehandlung die erste glasartige Platte (21.1) poliert wurde, um eine optisch funktionale Fläche zum Anbringen des optischen Elements (16) bereit zu stellen, wobei vorzugsweise auch die zweite glasartige Platte (23.1) einer Oberflächenbehandlung unterzogen wurde.

6. Vorrichtung nach Anspruch 1, **dadurch gekennzeichnet, dass** die Aufhängungen (14) so ausgeführt und angeordnet sind, dass die Krafteinleitung in die Schichtstruktur an mindestens drei Orten im Randbereich der Schichtstruktur erfolgt.

7. Vorrichtung nach einem der vorhergehenden Ansprüche, **dadurch gekennzeichnet, dass** Aufhängungen (14) mit der ersten glasartige Platte (21.1) und der zweite glasartige Platte (23.1) verklebt ist, um die Schichtstruktur im Wesentlichen auf Zug und/oder Schub zu beanspruchen werden.

8. Vorrichtung nach einem der vorhergehenden Ansprüche, **dadurch gekennzeichnet, dass** die erste glasartige Platte (21.1) aus dem gleichen Material besteht wie das optische Element (16).

9. Vorrichtung nach einem der vorhergehenden Ansprüche, **dadurch gekennzeichnet, dass** zum Verkleben der Deckschichten ein Klebefilm (21.3, 23.3) aufgebracht wird, der vorzugsweise temperaturaushärtend ist, wobei der Klebefilm bevorzugt ein Epoxyklebefilm ist.

10. Verwendung einer Vorrichtung nach einem der vorhergehenden Ansprüche in einem Satelliten, wobei die Vorrichtung mittels einer 3-Punkt Aufhängung (17) mechanisch mit dem Satelliten verbunden ist.

11. Verwendung nach Anspruch 10, **dadurch gekennzeichnet, dass** die 3-Punkt Aufhängung (17) Zweischenkelemente umfasst.

## Claims

1. Apparatus, comprising a flat optical bench (10; 20) and at least one optical element (16) which is attached to the flat optical bench (10; 20), whereby the flat optical bench (10; 20) comprises a layered structure, comprising:
- an extruded honeycomb plate comprising a light metal, paper or carbon fiber reinforced plastic (12; 22) having an upper and a lower side,
- a first cover layer (11; 21) being glued to the upper side of the honeycomb plate (12; 22) and comprising a first glass-type plate (21.1) which is surface treated on a side facing away from the honeycomb plate (12; 22),
- a second cover layer (13; 23) being glued to the lower side of the honeycomb plate (12; 22) and comprising a second glass-type plate (23.1),
wherein the flat optical bench (10; 20) comprises suspensions (14) which are glued to a lower side of the first cover layer (11; 21) and/or to an upper side of the second cover layer (13; 23) for guiding forces into the layered structure, and wherein the optical element (16) is attached to the surface-treated side of the first glass-type plate (21.1) by means of optical contracting.

2. Apparatus according to claim 1, **characterized in that** the first glass-type plate (21.1) and/or the second class-type plate (23.1) consists of glass or a glass-ceramic, preferably Zerodur, UVM, or a quartz glass.

3. Apparatus according to claim 1 or 2, **characterized in that** the honeycomb plate (12; 22) comprises aluminium, paper or CFK, whereby the walls of the honeycomb plate (12; 22) comprises holes, preferably in the form of perforations.

4. Apparatus according to claim 1, 2 or 3, **characterized in that** the first cover layer (11; 21) comprises an intermediate layer (21.2) in addiction to the first glass-type plate (21.1), which is situated between the honeycomb plate (12; 22) and the first glass-type plate (21.1) and which preferably comprises a fiber reinforced material.

5. Apparatus according to claim 1, **characterized in that** during the surface treatment the first glass-type plate (21.1) is being polished to provide an optically functional surface for attaching the optical element (16), wherein preferably also the second glass-type plate (23.1) is subjected a surface treatment.

6. Apparatus according to claim 1, **characterized in that** the suspensions (14) are realized and arranged such that the guiding of forces into the layered structure takes place at least at three locations at the circumferential area of the layered structure.

7. Apparatus according to one of the preceding claims, **characterized in that** the suspensions (14) are glued to the first glass-type plate (21.1) and the second glass-type plate (23.1) such that the layered structure is mainly subjected to tension and/or shear.

8. Apparatus according to one of the preceding claims, **characterized in that** the first glass-type plate (21.1) comprises the same material as the optical element (16).

9. Apparatus according to one of the preceding claims, **characterized in that** a glue film (21.3, 23.3) is applied for glueing of the cover layers which preferably hardens with temperature, wherein the glue film preferably is an epoxy glue film.

10. Usage of an apparatus according to one of the preceding claims in a satellite, whereby the apparatus is mechanically connected to the satellite by means of a 3-point suspension (17).

11. Usage according to claim 10, **characterized in that** the 3-point suspension (17) comprises double-limb elements.

## Revendications

1. Dispositif comprenant un banc optique plat (10 ; 20) et au moins un élément optique (16) qui est amené sur le banc optique plat (10 ; 20), le banc optique plat (10 ; 20) comprenant une structure en couches, avec
- un panneau alvéolaire extrudé en métal léger, papier ou plastique renforcé en fibre de carbone (12 ; 22) avec une face supérieure et une face inférieure plates,
- une première couche de protection (11 ; 21) qui est collée à la face supérieure du panneau alvéolaire (12 ; 22) et qui comprend une première plaque vitreuse (21.1) qui a reçu un traitement de surface sur le côté orienté à l'opposé du panneau alvéolaire (12 ; 22),
- une deuxième couche de protection (13 ; 23) qui est collée à la face inférieure du panneau alvéolaire en métal léger (12 ; 22) et qui comprend une deuxième plaque vitreuse (23.1),
dans lequel le banc optique plat (10 ; 20) comprend des suspensions (14) qui sont collées à une face inférieure de la première couche de protection (11 ; 21) et/ou à une face supérieure de la deuxième couche de protection (13 ; 23) pour l'introduction de force dans la structure en couches, et dans lequel l'élément optique (16) est amené par contact optique ou par collage sur le côté traité de la première plaque vitreuse (21.1).

2. Dispositif selon la revendication 1, **caractérisé en ce que** la première plaque vitreuse (21.1) et/ou la deuxième plaque vitreuse (23.1) est en verre ou en vitrocéramique, de préférence en zérodur, UVM ou un verre de quartz.

3. Dispositif selon la revendication 1 ou 2, **caractérisé en ce que** le panneau alvéolaire (12 ; 22) comprend de l'aluminium, du papier ou du CFK, les parois du panneau alvéolaire (12 ; 22) présentant des trous, de préférence sous la forme d'une perforation.

4. Dispositif selon la revendication 1, 2 ou 3, **caractérisé en ce que** la première couche de protection (11 ; 21) comprend, en plus de la première plaque vitreuse (21.1), une couche intermédiaire (21.2) qui est agencée entre le panneau alvéolaire (12 ; 22) et la première plaque vitreuse (21.1) et qui comprend de préférence un matériau renforcé par des fibres.

5. Dispositif selon la revendication 1, **caractérisé en ce que**, dans le cadre du traitement de surface, la première plaque vitreuse (21.1) est polie pour préparer une surface optiquement fonctionnelle pour amener l'élément optique (16), la deuxième plaque vitreuse (23.1) étant également de préférence soumise à un traitement de surface.

6. Dispositif selon la revendication 1, **caractérisé en ce que** les suspensions (14) sont réalisées et agencées de telle sorte que l'introduction de force dans la structure en couches se fait à au moins trois endroits sur la zone de bordure de la structure en couches.

7. Dispositif selon l'une des revendications précédentes, **caractérisé en ce que** les suspensions (14) sont collées à la première plaque vitreuse (21.1) et à la deuxième plaque vitreuse (23.1) pour solliciter la structure en couches essentiellement en traction et/ou en poussée.

8. Dispositif selon l'une des revendications précédentes, **caractérisé en ce que** la première plaque vitreuse (21.1) est réalisée dans le même matériau que l'élément optique (16).

9. Dispositif selon l'une des revendications précédentes, **caractérisé en ce que**, pour coller les couches de protection, on applique un film adhésif (21.3, 23.3) qui est de préférence thermodurcissable, le film adhésif préféré étant un film adhésif époxy.

10. Utilisation d'un dispositif selon l'une des revendications précédentes dans un satellite, le dispositif étant raccordé mécaniquement au satellite au moyen d'une suspension à trois points (17).

11. Utilisation selon la revendication 10, **caractérisée en ce que** la suspension à trois points (17) comprend des éléments à deux colonnes.
